Europäisches Patentamt

European Patent Office

Office européen des brevets

(11) Veröffentlichungsnummer: **0 222 094**
**A1**

## (12) EUROPÄISCHE PATENTANMELDUNG

(21) Anmeldenummer: **86112221.6**

(22) Anmeldetag: **04.09.86**

(51) Int. Cl.⁴: **B65G 1/06**

(30) Priorität: **09.10.85 DE 3536043**

(43) Veröffentlichungstag der Anmeldung:
**20.05.87 Patentblatt 87/21**

(84) Benannte Vertragsstaaten:
**CH DE FR GB IT LI**

(71) Anmelder: **ROBERT BOSCH GMBH**
**Postfach 50**
**D-7000 Stuttgart 1(DE)**

(72) Erfinder: **Fritz, Walter**
**Nordstrasse 11**
**D-8972 Sonthofen(DE)**
Erfinder: **Guderian, Martin**
**Michael-Beer.Strasse 2**
**D-8962 Waltenhofen(DE)**
Erfinder: **Guggemos, Hans**
**Robert-Bosch-Strasse 30**
**D-8976 Blaichach(DE)**
Erfinder: **Kaserer, Rudi**
**Am Buchrain 9**
**D-8981 Obermaiselstein(DE)**

(54) **Palettenwagen zum Transport von mit Werkstücken gefüllten Palettenstapeln.**

(57) Es wird ein Palettenwagen zum Transport von mit Werkstücken gefüllten Palettenstapeln vorge- schlagen, dessen den Palettenstapel tragender Tisch (2) auf dem Fahrgestell (1) des Wagens in vertikaler Richtung verschiebbar angeordnet ist. Dem Tisch - (2) ist eine Hubvorrichtung (20, 40) zugeordnet, welche die jeweils oberste Palette (3) des Paletten- stapels gegen einen mit dem Fahrgestell (1) verbun- denen, lösbaren Anschlag (22) drückt.

FIG.1

EP 0 222 094 A1

## Palettenwagen zum Transport von mit Werkstücken gefüllten Palettenstapeln

### Stand der Technik

Die Erfindung geht aus von einem Palettenwagen nach der Gattung des Hauptanspruchs. Um Werkstücke von einem Palettenwagen einer Werkstück-Bearbeitungsstation zuzuführen ist es bekannt, die Werkstücke mittels einer Greifereinrichtung aus der jeweils obersten Palette des Palettenstapels zu entnehmen. Ist die Palette leer, so wird sie vom Palettenstapel abgenommen, so daß die Werkstücke der darunterliegenden Palette für die Greifereinrichtung zugänglich sind. Wesentlich für ein schnelles und störungsfreies Arbeiten der Greifereinrichtung ist es, daß die Paletten in Richtung ihrer drei Raumachsen genau fixiert sind, um ein gezieltes Greifen der Werkstücke zu ermöglichen. Insbesondere sollte sich die jeweils oberste Palette des Palettenstapels, aus welcher die Werkstücke entnommen werden, stets in gleicher Höhe befinden und zwar unabhängig vom Gewicht und der Anzahl der gestapelten Paletten.

### Vorteile der Erfindung

Der erfindungsgemäße Palettenwagen mit den kennzeichnenden Merkmalen des Hauptanspruchs hat den Vorteil, daß der Abstand seines Tisches vom Fahrgestell des Wagens veränderbar ist uns mittels der Hubvorrichtung automatisch so eingestellt wird, daß die jeweils oberste Palette des auf dem Tisch befindlichen Palettenstapels stets einen vorgegebenen, durch den Anschlag definierten Abstand von einer durch die Stell-und Rollfläche des Palettenwagens gebildeten Bezugsebene hat. Dies bedeutet, daß die Werkstücke der Greifereinrichtung immer in gleicher Höhe angeboten werden, da die Hubvorrichtung dafür sorgt, daß die jeweils oberste Palette des Palettenstapels am Anschlag anliegt. Dadurch braucht die Zugriffsbewegung der Greifereinrichtung in vertikaler Richtung allenfalls um Beträge korrigiert zu werden, die sich aus unterschiedlichen Abmessungen der in der Palette befindlichen Werkstücke ergeben. Die Hubvorrichtung und der Anschlag sorgen außerdem dafür, daß die Palettenladung während des Transports nicht verrutschen kann.

Durch die in den Unteransprüchen aufgeführten Maßnahmen sind vorteilhafte Weiterbildungen und Verbesserungen des im Hauptanspruch angegebenen Palettenwagens möglich. Besonders vorteilhaft ist es, daß die Hubvorrichtung eine zentrische angeordnete Druckfeder aufweist, welche zwischen der Unterseite des Tisches und einer Platte des Fahrgestells eingespannt ist. Dies ermöglicht einen sehr einfachen, kostensparenden Aufbau des Palettenwagens, da ein Energiespeicher in Form einer Feder weitaus kostengünstiger ist als beispielsweise elektrische, pneumatische oder hydraulische Antriebe. Um den Palettenwagen an Palettenstapel mit stark unterschiedlichem Gewicht anpassen zu können ist ferner vorgesehen, daß dieser mit mindestens zwei zusätzlichen Druckfedern bestückbar ist, die zwischen einander diametral gegenüberliegenden Stellen des Tisches und des Fahrgestells einsetzbar sind. Für das problemlose Umrüsten des Wagens erweist es sich ferner von Vorteil, daß die Zusatzfedern in je einem Gehäuse untergebracht sind, das aus zwei ineinander verschiebbaren Rohren besteht, die an ihrem dem Tisch bzw. dem Fahrgestell zugewandten Ende durch je einen Deckel verschlossen sind, an denen sich die Feder abstützt, wobei an den Deckeln und an deren Anlageflächen am Tisch bzw. am Fahrgestell miteinander fluchtende Vorsprünge und Ausnehmungen zum Fixieren der Rohre vorgesehen sind.

### Zeichnung

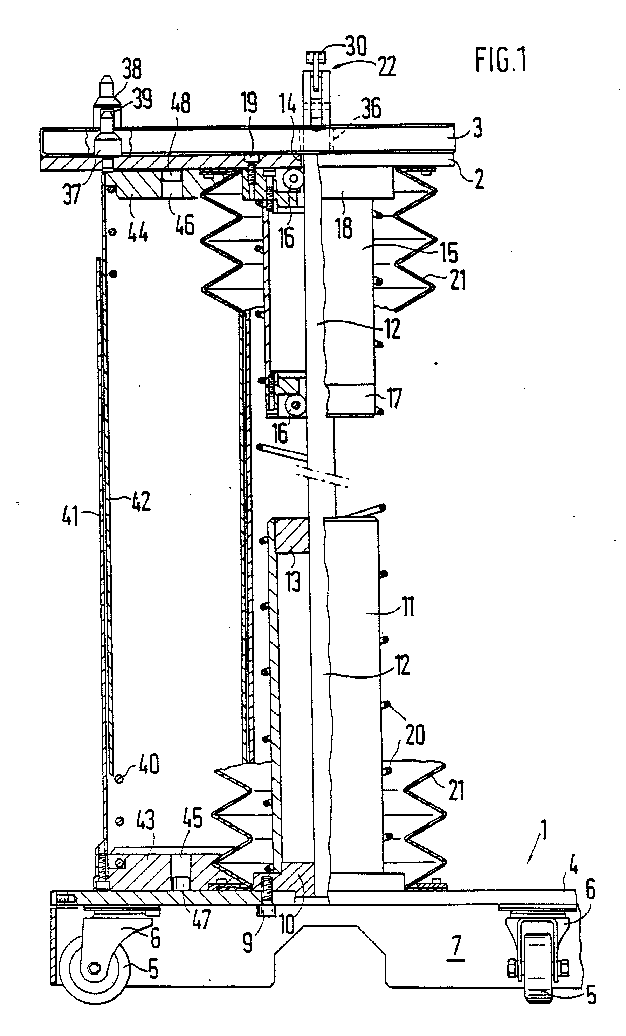

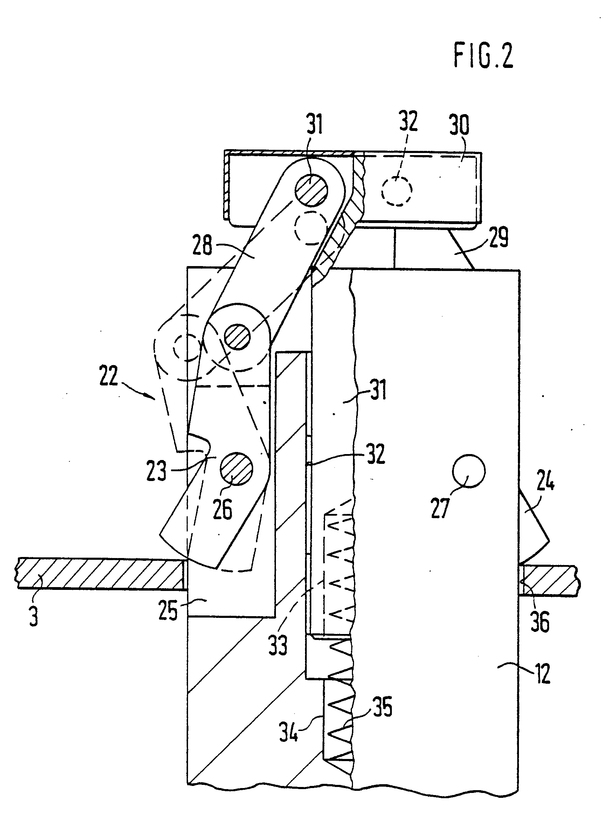

Ein Ausführungsbeispiel der Erfindung ist in der Zeichnung dargestellt und in der nachfolgenden Beschreibung näher erläutert. Es zeigen Figur 1 den Palettenwagen in einer teilweise geschnittenen Seitenansicht, Figur 2 eine vergrößert dargestellte Einzelheit des Palettenwagens nach Figur 1.

### Beschreibung des Ausführungsbeispieles

Der in Figur 1 dargestellte Palettenwagen hat ein Fahrgestell 1 und einen mit diesem verbundenen Tisch 2, auf dem Paletten 3 gestapelt sind. Der Übersichtlichkeit wegen ist nur eine Palette dargestellt. Das Fahrgestell 1 besteht aus einer Grundplatte 4, an deren Unterseite vier Räder 5 in drehbaren Haltern 6 gelagert sind. Die Räder 5 und ihre Halter 6 sind durch eine an der Grundplatte angebrachte Schürze 7 abgedeckt. Die Grundplatte 4 hat eine zentrische Bohrung 8, in die ein auf der Platte 4 aufliegender und mittels Gewindebolzen an dieser befestigter Teller 10 eingesetzt ist. Der Teller 10 trägt ein Halterohr 11 für eine vertikal angeordnete Führungsstange 12, welche im Teller 10 verankert ist und einen Abschlußdeckel 13 des Halterohres 11 durchgreift. An der Stange 12 ist der Tisch 3 in vertikaler Richtung verschiebbar geführt. Hierzu hat der Tisch 3 einen zentrischen Durchbruch 14, welcher vom freien Ende der Stange 12 durchgriffen wird. Außerdem ist an der Unterseite des Tisches 3 im Bereich des Durchbruches 14 ein Führungsrohr 15 mit Führungsrollen 16 befestigt, die an der Führungsstange 12 anliegen. Die Führungsrollen 16 sind in Aussparungen einer unteren und oberen Abdeckkappe 17 bzw. 18 gelagert, die mit dem Führungsrohr 15 verschraubt sind. Die obere Abdeckkappe ist mittels Gewindebolzen 19 an der Unterseite des Tisches 3 befestigt. Zwischen dem Halterohr 11 und dem Führungsrohr 15 ist ein Abstand vorhanden, der mindestens der Höhe eines Palettenstapels mit einer vorgegebenen, maximalen Anzahl von Paletten entspricht.

Auf das Halterohr 11 und das Führungsrohr 15 ist eine Druckfeder 20 aufgesteckt, welche sich mit ihrem einen Ende am Teller 10 und mit ihrem anderen Ende an der oberen Abdeckkappe 18 des Rohrs 15 abstützt. Die Feder 20 ist von einem Faltenbalg 21 umschlossen, der an der Unterseite des Tisches 3 und an der Grundplatte 4 des Fahrgestells 1 befestigt ist. Die Druckfeder 20 ist bestrebt, den Tisch 2 bzw. auf dem Tisch befindliche Paletten 3 an einen am freien Ende der Führungsstange 12 angeordneten, lösbaren Anschlag 22 anzulegen. Dieser Anschlag besteht im Ausführungsbeispiel aus zwei gleichen, doppelarmigen Hebeln 23, 24, die in einander gegenüberliegenden Aussparungen 25 der Führungsstange 12 an Zapfen 26 bzw. 27 gelagert sind. Die beiden Hebel sind über je ein Koppelglied 28 bzw. 29 an eine Drucktaste 30 angelenkt. Die Lagerzapfen der Koppelglieder in der Drucktaste 30 sind mit 31 und 32 bezeichnet.

Die Drucktaste 30 ist mit einem stiftförmigen Fortsatz 31 in einer Längsbohrung 32 der Stange 12 verschiebbar geführt. Eine in Bohrungen 33, 34 des Fortsatzes 31 bzw. der Stange 12 eingesetzte Druckfeder 35 sucht die Taste 30 in der in Figur 2 dargestellten Position zu halten, in welcher die Hebel 23, 24 und die Koppelglieder 28, 29 ihre ausgezogen gezeichnete Stellung einnehmen. In dieser Stellung ragen die radienförmig ausgebildeten Enden der Hebel 23, 24 aus der Führungsstange heraus und arretieren die darunterliegenden Paletten 3.

Wie aus den Figuren ersichtlich, ist jede Palette 3 mit einem an die Querschnittsform der Führungsstange 12 angepaßten, zentrischen Durchbruch 36 versehen, welcher von der Stange 12 durchgriffen wird. Dadurch werden die Paletten bezüglich des Tisches 2 zentriert. Außerdem hat der Tisch 2 und jede Palette 3 miteinander fluchtende Zapfen 37, 38, wobei der auf dem Tisch befestigte Zapfen 37 in eine Längsbohrung 39 des Zapfens 38 der auf dem Tisch aufliegenden Palette eingreift, während für den Zapfen 38 wiederum eine Aufnahmebohrung im Zapfen der darüberliegenden Palette vorgesehen ist. Die Zapfen 37, 38 und die Führungsstange 12 sorgen für eine Zentrierung und Fixierung der Paletten in der durch den Tisch 2 vorgegebenen Horizontalebene. Eine Fixierung der Paletten in vertikaler Richtung gegen die Wirkung der Druckfeder 20 erfolgt durch den Anschlag 22, welcher der jeweils obersten Palette eines Palettenstapels einen gleichbleibenden Abstand von der Grundplatte 4 des Fahrgestells 1 des Palettenwagens aufzwingt.

Zum Beladen des Palettenwagens werden die mit Werkstücken gefüllten Paletten 3 einzeln über das freie Ende der Führungsstange 12 angehoben und dann so abgesetzt, daß das freie Ende der Stange mit dem Anschlag 22 durch den Durchbruch 36 der Paletten 3 hindurchtritt und die Fixierzapfen miteinander in Eingriff kommen. Beim Stapelvorgang müssen die Paletten zusammen mit dem Tisch 2 gegen die Kraft der Druckfeder 20 soweit nach unten gedrückt werden, daß die Hebel 23, 24 die jeweils oberste Palette des Stapels festhalten können. Die vorspringenden Teile der Hebel 23, 24 werden bei diesem Vorgang zunächst durch die Kanten des Durchbruchs 36 nach innen in die gestrichelt gezeichnete Lage gedrückt und springen anschließend unter der Wirkung der der Taste 30 zugeordneten Feder 35 wieder in ihre Arretierstellung zurück, in welcher sie den Palettenstapel durch Kontakt mit der Deckplatte der jeweils obersten Palette des Stapels festhalten. Zum Abbau des Stapels wird die Taste 30 niedergedrückt, so daß die Hebelenden den Palettenstapel freigeben und dieser durch die Druckfeder 12 angehoben wird. Die jeweils oberste Palette, die leer bzw. mit in der Bearbeitungsstation bearbeiteten Werkstücken gefüllt ist, wird abgenommen und die restlichen Paletten des Stapels wieder soweit nach unten gedrückt, daß die Hebel 23, 24 in ihre Arretierstellung zurückfedern können.

Damit der Palettenwagen auch Palettenstapel verkraftet, deren Gewicht größer ist die Rückstellkraft der Druckfeder 20, kann der Wagen im Bedarfsfall mit mindestens zwei zusätzlichen Druckfedern bestückt werden, die zwischen einander diametral gegenüberliegenden Stellen des Tisches 2 und des Fahrgestells 1 einsetzbar sind. Eine solche Druckfeder 40 ist in Figur 1 dargestellt. Sie ist in einem Gehäuse untergebracht, das aus zwei ineinander verschiebbaren Rohren 41, 42 besteht. Das der Grundplatte 4 des Fahrgestells 1 zugekehrte Ende des äußeren Rohres 41 und ebenso das dem Tisch 2 zugekehrte Ende des inneren Rohres 42 ist durch je einen massiven Deckel 43, bzw. 44 verschlossen, an denen sich die Feder 40 abstützt. Jeder Deckel hat eine zentrische Bohrung 45 bzw. 46 zur Aufnahme eines Fixierstif tes 47 bzw. 48, welcher an der Grundplatte 4 bzw. an der Unterseite des Tisches 2 befestigt ist. Durch diese Art der Fixierung können die Zusatzfedereinheiten sehr einfach und schnell zugestellt und wieder entfernt werden. Es können bis zu vier Zusatzfedereinheiten pro Palettenwagen verwendet werden, so daß dieser in optimaler Weise an das jeweilige Gewicht eines Palettenstapels angepaßt werden kann. Wesentlich ist, daß die Federkraft ausreicht, um die jeweils oberste Palette eines auf den Tisch 2 aufgesetzten Palettenstapels sicher an die in Wirkstellung befindlichen Anschlaghebel 23, 24 anzulegen, damit die Lage der obersten Palette, aus welcher die Werkstücke entnommen bzw. in welcher bearbeitete Werkstücke abgelegt werden in vertikaler Richtung genau definiert ist.

## Ansprüche

1. Palettenwagen zum Transport von mit Werkstücken gefüllten Palettenstapeln, insbesondere für automatische Handhabungs-und Bearbeitungssysteme, bei denen die Werkstücke mittels einer Greifereinrichtung aus den Paletten entnommen und einer Bearbeitungsstation zugeführt werden, dadurch gekennzeichnet, daß der den Palettenstapel (3) tragende Tisch (2) auf dem Fahrgestell (1) des Palettenwagens in vertikaler Richtung verschiebbar angeordnet ist, und daß dem Tisch eine Hubvorrichtung (20, 40) zugeordnet ist, welche die jeweils oberste Palette des Palettenstapels gegen einen mit dem Fahrgestell des Wagens verbundenen, lösbaren Anschlag (22) drückt.

2. Palettenwagen nach Anspruch 1, dadurch gekennzeichnet, daß die Hubvorrichtung eine zentrisch angeordnete Druckfeder (20) aufweist, welche zwischen der Unterseite des Tisches (2) und einer Platte (4) des Fahrgestells (1) eingespannt ist.

3. Palettenwagen nach Anspruch 1 oder 2, dadurch gekennzeichnet, daß der Tisch (2) an mindestens einer am Fahrgestell (1) verankerten Stange (12) in vertikaler Richtung verschiebbar geführt ist.

4. Palettenwagen nach Anspruch 3, dadurch gekennzeichnet, daß die Führungsstange (12) einen im Schwerpunkt des Tisches (2) ausgebildeten Durchbruch (14) sowie Durchbrüche (36) der auf den Tisch gestapelten Paletten (3) durchgreift, und daß am freien Ende der Stange der lösbare Anschlag (22) für die jeweils oberste Palette des Palettenstapels angeordnet ist.

5. Palettenwagen nach Anspruch 4, dadurch gekennzeichnet, daß der lösbare Anschlag (22) aus zwei Hebeln (23, 24) besteht, die einander gegenüberliegend in Aussparungen (25) der Führungsstange (12) schwenkbar gelagert und an eine in der Stange geführte, federbelastete Drucktaste (30) derart angelenkt sind, daß beim Betätigen der Taste die aus der Führungsstange vorstehenden Enden der Hebel unter Freigabe der jeweils obersten Palette (3) des Palettenstapels in die Aussparungen eintauchen.

6. Palettenwagen nach einem der Ansprüche 3 bis 5, dadurch gekennzeichnet, daß die Führungsstange (12) in einem an einer Platte (4) des Fahrgestells (1) befestigten Halterohr (11) sitzt, und daß an der Unterseite des Tisches (2) ein die Stange umschließendes Führungsrohr (15) angebracht ist.

7. Palettenwagen nach Anspruch 6, dadurch gekennzeichnet, daß das Halterohr (11) und das Führungsrohr (21) durch eine Kappe (18) bzw. einen Teller (10) verschlossen sind, an denen sich die auf die Rohre aufgesteckte, zentrisch angeordnete Druckfeder (20) mit ihren beiden Enden abstützt.

8. Palettenwagen nach Anspruch 7, dadurch gekennzeichnet, daß zwischen der Unterseite des Tisches (2) und der Platte (4) des Fahrgestells (1) ein die Druckfeder (20) umschliessender Faltenbalg (21) angeordnet ist.

9. Palettenwagen nach einem der Ansprüche 2 bis 8, dadurch gekennzeichnet, daß der Wagen mit mindestens zwei zusätzlichen Druckfedern (40) bestückbar ist, die zwischen einander diametral gegenüberliegenden Stellen des Tisches (2) und des Fahrgestells (1) einsetzbar sind.

10. Palettenwagen nach Anspruch 9, dadurch gekennzeichnet, daß die Zusatzfedern (40) in je einem Gehäuse untergebracht sind, das aus zwei ineinander verschiebbaren Rohren (41, 42) besteht, die an ihren dem Tisch (2) bzw. dem Fahrgestell (1) zugewandten Enden durch je einen Deckel (43 bzw. 44) verschlossen sind, an denen sich die Feder abstützt, und daß an den Deckeln und an deren Anlageflächen am Tisch bzw. am Fahrgestell miteinander fluchtende Vorsprünge (47, 48) und Ausnehmungen (45 bzw. 46) zum Fixieren der Rohre vorgesehen sind.

0 222 094

FIG.1

FIG.2

| | **EINSCHLÄGIGE DOKUMENTE** | | EP 86112221.6 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE - A1 - 3 300 350 (BUTENSCHÖN) -- | | B 65 G 1/06 |
| A | GB - A - 1 526 330 (NCR CORPORATION) ---- | | |

RECHERCHIERTE
SACHGEBIETE (Int. Cl.4)

B 65 G 1/0.
B 65 G 59/C.
B 66 F 3/C.

Der vorliegende Recherchenbericht wurde für alle Patentansprüche erstellt

| Recherchenort | Abschlußdatum der Recherche | Prüfer |
|---|---|---|
| WIEN | 13-01-1987 | PISSENBERGER |